# EUROPEAN PATENT APPLICATION

(11) **EP 4 242 989 A1**
(43) Date of publication of application: **13.09.2023**
(21) Application number: 22161065.2
(22) Date of filing: 09.03.2022
(51) Int. Cl.: G07C 5/08

(54) **DYNAMIC ADJUSTMENT OF AN EVENT SEGMENT LENGTH OF A VEHICLE EVENT RECORDING BUFFER**

(71) Applicant: Zenseact AB, 417 56 Göteborg (SE)
(72) Inventor: GYLLENHAMMAR, Magnus, 435 43 Pixbo (SE); VAKILZADEH, Majid Khorsand, 431 66 Mökndal (SE)
(74) Representative: Valea AB

(57) **Abstract**

The present disclosure relates to a method performed by a buffer segment length adjusting system (1) for dynamically adjusting an event segment length of data stored in an event recording buffer (3) of an Automated Driving System, ADS (21), of a vehicle (2). The buffer segment length adjusting system obtains (1001) sensor data of one or more sensors (22) onboard the vehicle. The buffer segment length adjusting system further identifies (1002), upon the sensor data rendering fulfilment - and/or a state of a software of the ADS rendering fulfilment - of event recording triggering criteria, conditions of a triggering event underlying the fulfilment. Moreover, the buffer segment length adjusting system determines (1003) at least a first current ADS-related operational condition. Furthermore, the buffer segment length adjusting system sets (1005) a respective start time point and end time point of - e.g. an event segment length of - said event recording buffer based on the triggering event conditions and the at least first current ADS-related operational condition.

The disclosure also relates to a buffer segment length adjusting system in accordance with the foregoing, a vehicle comprising such a buffer segment length adjusting system, and a respective corresponding computer program product and non-volatile computer readable storage medium.

## Description

### TECHNICAL FIELD

The present disclosure relates to dynamically adjusting an event segment length of data stored in an event recording buffer of an Automated Driving System, ADS, of a vehicle.

### BACKGROUND

Within the automotive field, there has for quite some years been activity in the development of autonomous vehicles. An increasing number of modern vehicles have advanced driver-assistance systems, ADAS, to increase vehicle safety and more generally road safety. ADAS - which for instance may be represented by adaptive cruise control, ACC, collision avoidance system, forward collision warning, etc. - are electronic systems that may aid a vehicle driver while driving. Moreover, in a not-too-distant future, Autonomous Driving, AD, will to a greater extent find its way into modern vehicles. AD along with ADAS will herein be referred to under the common term Automated Driving System, ADS, corresponding to all different levels of automation, for instance as defined by the SAE J3016 levels (0 - 5) of driving automation. An ADS may be construed as a complex combination of various components that can be defined as systems where perception, decision making, and operation of the vehicle - at least in part - are performed by electronics and machinery instead of a human driver. This may include handling of the vehicle, destination, as well as awareness of surroundings. While the automated system has control over the vehicle, it allows the human operator to leave all or at least some responsibilities to the system. To perceive its surroundings, an ADS commonly combines a variety of sensors, such as e.g. radar, LIDAR, sonar, camera, navigation and/or positioning system e.g. GNSS such as GPS, odometer and/or inertial measurement units, upon which advanced control systems may interpret sensory information to identify appropriate navigation paths, as well as obstacles and/or relevant signage.

When developing an ADS for the next generation ADAS features, it is crucial to have relevant data. Further, to meet shifting customer demands and changes to traffic dynamics, it is paramount to continuously measure and monitor events experienced by vehicles in a fleet, i.e. vehicles already put into market and that are in use, commonly referred to as production vehicles. It is, however, intractable to store and analyze all data experienced by the ADS vehicles, as this could amount to TBs of data for each single drive. There are multitudes of solutions focusing on identifying interesting scenarios and events in order to trigger data storage. However, there is an additional need to aim for and/or ensure that only relevant - and/or the most relevant - data for each such triggered event is locally and temporarily stored onboard a vehicle, such as to avoid filling an event buffer of the vehicle before it can be unloaded e.g. to a back office e.g. for further analysis and/or inclusion in the development.

### SUMMARY OF THE INVENTION

It is therefore an object of embodiments herein to provide an approach for in an improved and/or alternative manner dynamically adjusting an event segment length of data stored in an event recording buffer of a vehicle ADS.

The object above may be achieved by the subject-matter disclosed herein. Embodiments are set forth in the appended claims, in the following description and in the drawings.

The disclosed subject-matter relates to a method performed by a buffer segment length adjusting system for dynamically adjusting an event segment length of data stored in an event recording buffer of an ADS of a vehicle. The buffer segment length adjusting system obtains sensor data of one or more sensors onboard the vehicle. The buffer segment length adjusting system further identifies, upon the sensor data rendering fulfilment - and/or a state of a software of the ADS rendering fulfilment - of event recording triggering criteria, conditions of a triggering event underlying said fulfilment. Moreover, the buffer segment length adjusting system determines at least a first current ADS-related operational condition. Furthermore, the buffer segment length adjusting system sets a respective start time point and end time point of - e.g. an event segment length of - the event recording buffer based on the triggering event conditions and the at least first current ADS-related operational condition.

The disclosed subject-matter further relates to a buffer segment length adjusting system for - and/or adapted and/or configured for - dynamically adjusting an event segment length of data stored in an event recording buffer of an ADS of a vehicle. The buffer segment length adjusting system comprises a sensor data obtaining unit for obtaining sensor data of one or more sensors onboard the vehicle. The buffer segment length adjusting system further comprises a triggering event identifying unit for identifying, upon the sensor data rendering fulfilment - and/or a state of a software of the ADS rendering fulfilment - of event recording triggering criteria, conditions of a triggering event underlying the fulfilment. Moreover, the buffer segment length adjusting system comprises an operational conditions determining unit for determining at least a first current ADS-related operational condition. Furthermore, the buffer segment length adjusting system comprises a dynamic buffer setting unit for setting a respective start time point and end time point of - e.g. an event segment length of - the event recording buffer based on the triggering event conditions and the at least first current ADS-related operational condition.

Furthermore, the disclosed subject-matter relates to a vehicle comprising a buffer segment length adjusting system as described herein.

Moreover, the disclosed subject-matter relates to a computer program product comprising a computer program containing computer program code means arranged to cause a computer or a processor to execute the steps of the buffer segment length adjusting system described herein, stored on a computer-readable medium or a carrier wave.

The disclosed subject-matter further relates to a non-volatile computer readable storage medium having stored thereon said computer program product.

Thereby, there is introduced an approach enabling automatically adapting a segment length of a buffer used when storing captured scenarios, logs and/or measurement data pertaining to valuable driving and/or system events of a vehicle. That is, since there is obtained sensor data of one or more sensors onboard the vehicle, there is e.g. continuously and/or intermittently - for instance while the vehicle is traveling - derived and/or buffered from various sensors onboard the vehicle, data indicative of current sensory information, such as e.g. from surrounding detecting sensors, brake sensor(s), malfunction sensor(s), etc. Furthermore, that is, since upon the sensor data rendering fulfilment - and/or a state of a software of the ADS rendering fulfilment - of event recording triggering criteria, there is identified conditions of a triggering event underlying said fulfilment, there is subsequent detection of an event meeting the event recording triggering criteria determined circumstances of the triggering event. That is, following occurrence of an event invoking and/or initiating data storage and/or data collection in said event recording buffer of operational data of the vehicle, there is derived the circumstances of the triggering event e.g. the type and/or category thereof, such as perception-related error, KPI exceedance, etc. Moreover, that is, since there is determined at least a first current ADS-related operational condition, there is derived ongoing or essentially ongoing - and/or recently ongoing - operational conditions affecting - and/or being relevant in view of - the ADS, such as e.g. state(s) of vehicle surroundings and/or state(s) - e.g. internal state(s) - of the vehicle and/or of the ADS and/or of a software thereof. Furthermore, that is, since there is set a respective start time point and end time point of - e.g. an event segment length of - the event recording buffer based on the triggering event conditions and the at least first current ADS-related operational condition, there may by assessment of the identified conditions of the triggering event and the determined current one or more ADS-related operational conditions, be defined and/or derived in view of the triggering event respective event recording buffer start and end time points deemed and/or defined relevant, suitable and/or sufficient pertinent such conditions. That is, for differing triggering event conditions in combination with differing ADS-related operational condition(s), differing data storage time periods may be relevant; for instance, for a certain type of triggering event during certain ADS-related operational conditions, certain start and/or end time points may be sufficient, while for another - or the same - type of triggering event during other ADS-related operational conditions, other start and/or end time points may be sufficient. That is, differing types of ADS-related operating conditions may for instance infer differing event onsets and/or event types. Accordingly, rather than - as known in the art - storing a fixed buffer length for all triggered events, with the introduced concept there is provided an approach dynamically and/or automatically adjusting the time period for which data should be stored by taking into consideration the triggering event conditions in combination with the current ADS-related operational condition(s). Thus, by adapting a buffer segment length of the event recording buffer in accordance with said conditions, the buffer storage used for each respective event triggering data storage, may be sufficiently set, such as optimized. This in turn may decrease the memory needs to be allocated for data storage, which instead may be allocated to other applications e.g. running on a - e.g. central - compute node. Furthermore, in effect, this may lead to avoiding storing unnecessary data, which subsequently may increase the probability of capturing all - or essentially all - or an increased amount of relevant and interesting data, e.g. from production vehicles with their limitations in terms of on-board storage. Subsequently, this may increase and/or maximize the probability to store and potentially retain all or essentially all - or an increased number of - experienced events, in event recording buffers, e.g. of production vehicles. Consequently, with the introduced concept, the possibility of missing rare event or edge cases may be decreased and/or minimized, subsequently increasing confidence in monitoring capabilities.

For that reason, an approach is provided for in an improved and/or alternative manner dynamically adjusting an event segment length of data stored in an event recording buffer of a vehicle ADS.

The technical features and corresponding advantages of the above-mentioned method will be discussed in further detail in the following.

### BRIEF DESCRIPTION OF THE DRAWINGS

The various aspects of the non-limiting embodiments, including particular features and advantages, will be readily understood from the following detailed description and the accompanying drawings, in which:
**Fig. 1** is a schematic block diagram illustrating an exemplifying buffer segment length adjusting system according to embodiments of the disclosure;
**Fig. 2** is a flowchart depicting an exemplifying method performed by a buffer segment length adjusting system according to embodiments of the disclosure;
**Fig. 3** depicts a schematic view of an exemplifying scenario involving a perception-related error; and
**Fig. 4** depicts a schematic view of exemplifying scenario involving a low/high KPI value where scenario identification is used as for subsequent buffer segment length determination.

### DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to dynamically adjusting an event segment length of data stored in an event recording buffer of a vehicle ADS, there will be disclosed an approach enabling automatically adapting the segment length of the buffer used when storing captured scenarios, logs and/or measurement data pertaining to valuable driving and/or system events of the vehicle.

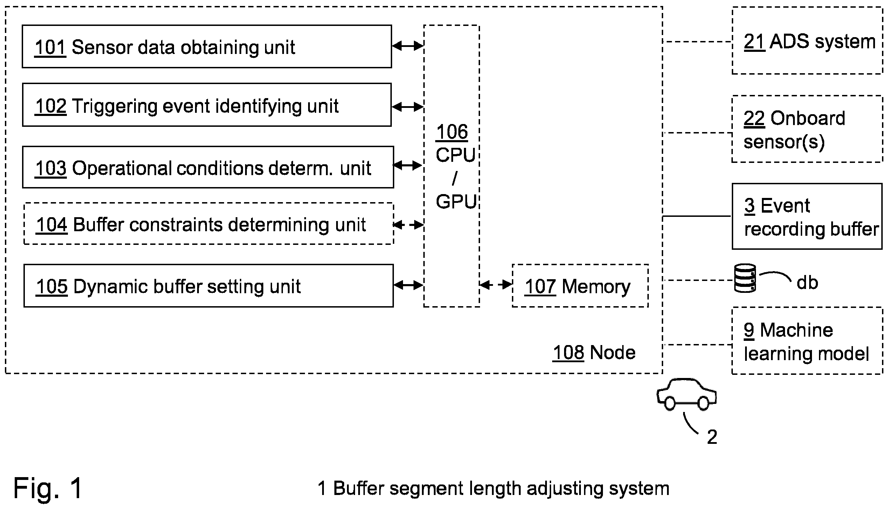

Referring now to the figures, there is depicted in **Fig. 1** a schematic block diagram of an exemplifying **buffer segment length adjusting system 1** according to embodiments of the disclosure. The buffer segment length adjusting system 1 is adapted for dynamically adjusting an event segment length of data stored in an **event recording buffer 3** of an **ADS 21** of a **vehicle 2.** The event recording buffer 3 may be represented by any feasible at least first buffer - for instance a ring buffer and/or FIFO buffer e.g. in RAM and/or a data storage such as a hard drive - intended and/or configured for storing captured scenarios, logs and/or measurement data pertaining to valuable driving and/or system events of the vehicle 2. The event recording buffer 3 may accordingly be configured for storing e.g. raw data and/or object-level data - e.g. associated with and/or from onboard sensors, buses, application interfaces etc. - and/or essentially entire and/or all data in the vehicle 2 - pertinent a predeterminable time period. The phrase "buffer segment length adjusting system" may refer to "buffer event data length adjusting system", "buffer event segment adjusting system", "buffer data segment adjusting system", "buffer event segment length adjusting system", "buffer scenario length adjusting system", "buffer scenario segment length adjusting system", "buffer data segment length adjusting system", "buffer segment length adapting system" and/or "assessment system", whereas "a method performed by a buffer segment length adjusting system" may refer to "an at least partly computer-implemented method performed by a buffer segment length adjusting system". Moreover, "for dynamically adjusting an event segment length of data stored in an event recording buffer" may refer to "for adjusting an event segment length of data stored in an event recording buffer", "for dynamically adapting an event segment length of data stored in an event recording buffer", "for dynamically adjusting a segment length of an event recording buffer", "for dynamically adjusting an event segment length of data stored - and/or to be stored - in an event recording buffer" and/or "for dynamically adjusting an event segment duration of data stored in an event recording buffer", "and according to an example further to "for dynamically adjusting an event segment length of data stored in an event recording buffer configured for storing captured scenario data, logs, measurements and/or sensor data". The phrase "event recording buffer of an [...] ADS of a vehicle", on the other hand, may refer to "event recording buffer pertinent and/or associated with an [...] ADS of a vehicle". The vehicle 2 - which may be referred to as host vehicle or ego-vehicle - may be represented by any arbitrary - e.g. known - manned or unmanned vehicle, for instance an engine-propelled or electrically-powered vehicle such as a car, truck, lorry, van, bus and/or tractor. Moreover, the term "vehicle" may refer to "autonomous and/or at least partly autonomous vehicle", "driverless and/or at least partly driverless vehicle", and/or "self-driving and/or at least partly self-driving vehicle", and according to an example further to "production vehicle", "fleet vehicle", "launched vehicle", "road-traffic vehicle" and/or "public road vehicle". Furthermore, the ADS 21 on-board the vehicle 2 may be represented by any arbitrary ADAS or AD system e.g. known in the art and/or yet to be developed. Moreover, the vehicle 2 and/or ADS 21 may comprise, be provided with and/or have onboard a perception module and/or system (not shown) adapted to estimate surroundings of the vehicle 2, and subsequently adapted to estimate world views of the surroundings e.g. with support from a - e.g. commonly known - digital map (not shown) such as a high definition, HD, map, and/or an equivalent and/or successor thereof. The perception system may refer to any commonly known system, module and/or functionality, e.g. comprised in one or more electronic control modules, ECUs, and/or nodes of the vehicle 2 and/or the ADS 21, adapted and/or configured to interpret sensory information - relevant for driving of the vehicle 2 - to identify e.g. objects, obstacles, vehicle lanes, relevant signage, appropriate navigation paths etc. The perception system - which may be adapted to support e.g. sensor fusion, tracking, localization etc. - may thus be adapted to rely on sensory information. Such exemplifying sensory information may, for instance, be derived from one or more - e.g. commonly known - sensors comprised in and/or provided onboard the vehicle 2 adapted to sense and/or perceive the vehicle's 2 whereabouts and/or surroundings, for instance represented by one or a combination of one or more of surrounding detecting sensors, such as image capturing devices e.g. camera(s), radar(s), lidar(s), ultrasonics etc., and/or a positioning system, odometer, inertial measurement units etc. In other words, a perception system is in the present context thus to be understood as a system responsible for acquiring raw sensor data from onboard sensors, such as from surrounding detecting sensors etc., and converting this raw data into scene understanding.

As illustrated in an exemplifying manner in exemplifying Fig. 1, the buffer segment length adjusting system 1 is - e.g. by means of a **sensor data obtaining unit 101** - adapted and/or configured for obtaining sensor data of one or more **sensors 22** onboard the vehicle 2. Thereby, there is e.g. continuously and/or intermittently - for instance while the vehicle is traveling - derived and/or buffered from various sensors 22 onboard the vehicle 2, data indicative of current sensory information, such as e.g. from surrounding detecting sensors, brake sensor(s), malfunction sensor(s), etc.

The sensor data may be obtained in any feasible - e.g. known - manner, such as continuously and/or intermittently, and further be obtained e.g. while the vehicle 2 is travelling and/or while standing still. Moreover, the sensor data may be of any feasible - e.g. known - format, and further the extent of sensor data obtained be of any feasible magnitude. The sensor(s) 22 may be represented by any feasible one or more - e.g. known - sensors onboard the vehicle 2 adapted to provide sensor data relevant in view of an ADS 21, for instance including surrounding detecting sensors adapted to capture surroundings of the vehicle 2, driveline sensor(s), brake sensor(s), malfunction sensors, etc. The phrase "obtaining sensor data" may refer to "capturing, deriving and/or buffering sensor data" and/or "obtaining onboard said vehicle sensor data", and according to an example further to "obtaining continuously and/or intermittently sensor data". Moreover, "sensor data of one or more sensors" may refer to "sensor data from one or more sensors" and/or "sensor data captured by one or more sensors". According to an example, the phrase "obtaining sensor data of one or more sensors onboard said vehicle" may refer to "obtaining ADS-related status and/or state data, at least comprising sensor data of one or more sensors onboard said vehicle".

As illustrated in an exemplifying manner in exemplifying Fig. 1, the buffer segment length adjusting system 1 is further - e.g. by means of a **triggering event identifying unit 102** - adapted and/or configured for identifying upon the sensor data rendering fulfilment - and/or a state of a software of the ADS 21 rendering fulfilment - of event recording triggering criteria, conditions of a triggering event underlying said fulfilment. Thereby, subsequent detection of an event meeting the event recording triggering criteria, there is determined circumstances of the triggering event. That is, following occurrence of an event invoking and/or initiating data storage and/or data collection in said event recording buffer 3 of operational data of the vehicle 2, there is derived the circumstances of the triggering event e.g. the type and/or category thereof, such as perception-related error, KPI exceedance, etc.

Detecting occurrence of a triggering event may be accomplished in any feasible - e.g. known - manner, whether said triggering event is derived from sensor data or a state of - or in - an ADS-related software. The triggering event may - e.g. as known in the art - be represented by any feasible event such as an ADS-related event and/or ADS performance-related event - e.g. a critical event and/or safety critical event - complying with the event recording triggering criteria which in turn - e.g. as known in the art - may be represented by any feasible one or more conditions such as ADS-related conditions and/or ADS performance-related conditions stipulating under what circumstances event recording should be triggered, for instance represented by and/or comprising one or more of activation of a vehicle emergency braking system, dropping of a KPI (Key Performance Indicator) value below - and/or exceeding - a predeterminable KPI threshold, a perception error and/or perception discrepancy exceeding a predeterminable limit, a difference in detected object free area between differing surrounding detecting sensors - such as e.g. camera and lidar- exceeding a predeterminable limit, overriding by a vehicle driver of an active driving mode of the ADS 21, stress level of a vehicle driver exceeding a predeterminable stress level threshold, discrepancy to a predeterminable extent between systems, certain behaviour of other vehicles, certain detected - e.g. strange - objects, certain rare events, etc. The phrase "identifying [...] conditions of a triggering event underlying said fulfilment" may refer to "deriving, assessing, determining, categorizing and/or classifying [...] conditions of a triggering event underlying said fulfilment", "identifying [...] circumstances and/or characteristics of a triggering event underlying said fulfilment", "identifying [...] conditions of a triggering event behind and/or causing said fulfilment", and according to an example further to "identifying [...] event type and/or category of a triggering event underlying said fulfilment". The phrase "upon [...] rendering fulfilment of event recording criteria", on the other hand, may refer to "when and/or provided [...] rendering fulfilment of event recording criteria", "upon [...] exhibiting and/or leading to fulfilment of event recording criteria", "upon [...] fulfilling event recording criteria", "upon [...] rendering fulfilment of at least a first event triggering condition", "upon [...] rendering fulfilment of predeterminable event recording criteria", "upon [...] rendering fulfilment of triggering criteria" and/or "upon [...] rendering fulfilment or event recording criteria stipulating conditions for under what circumstances - and/or for which events - event recording and/or data storage should be triggered". Moreover, "upon said sensor data rendering fulfilment" may refer to "upon at least a portion of said sensor data rendering fulfilment" and/or "upon said sensor data contributing to rendering fulfilment", whereas "upon [...] a state of a software of the ADS rendering fulfilment" may refer to "upon [...] a derived and/or determined state of a software of the ADS rendering fulfilment" and/or "upon [...] a state of a software of the ADS contributing to rendering fulfilment". According to an example, the phrase "identifying, upon said sensor data rendering fulfilment - and/or a state of a software of the ADS rendering fulfilment - of event recording triggering criteria, conditions of a triggering event underlying said fulfilment" may refer to "detecting occurrence of a triggering event and identifying conditions - e.g. type and/or category - of said triggering event".

As illustrated in an exemplifying manner in exemplifying Fig. 1, the buffer segment length adjusting system 1 is further - e.g. by means of an **operational conditions determining unit 103** - adapted and/or configured for determining at least a first current ADS-related operational condition. Thereby, there is derived ongoing or essentially ongoing - and/or recently ongoing - operational conditions affecting - and/or being relevant in view of - the ADS 21, such as e.g. state(s) of vehicle surroundings and/or state(s) - e.g. internal state(s) - of the vehicle 2 and/or of the ADS 21 and/or of a software thereof.

The ADS-related operational condition(s) - which for instance may be derived at least partly from the obtained sensor data and/or deduced therefrom e.g. via a perception system and/or derived from within software of the ADS 21 and/or vehicle 2 - may be represented by any feasible operational conditions affecting - and/or being deemed and/or identified relevant in view of - the ADS 21. The ADS-related operational conditions may accordingly be represented by for instance state(s) of vehicle surroundings and/or environmental circumstances such as e.g. weather and/or road type etc. and/or regional-related such as e.g. country of current vehicle position and/or country of vehicle registration etc., and/or represented by vehicle states such as e.g. speed, acceleration, active sensors etc. of the vehicle 2, driving state(s) of the vehicle 2 such as e.g. DDT (Dynamic Driving Task) and/or DDT Fallback etc., active feature type(s) of the vehicle 2, internal state(s) e.g. condition(s), state(s), parameter value(s), signal(s) etc. within software - e.g. ADS software - such as e.g. of different algorithms used in the ADS 21 and/or vehicle 2 e.g. state(s) of a state machine and/or value(s) of one or more software parameters etc., and/or internal state(s) of the vehicle 2 such as e.g. measured from so called internal sensors 22 e.g. for the purpose of estimating actuator capabilities and/or state(s) of so called external sensors e.g. of a perception system, etc. The phrase "determining at least a first current ADS-related operational condition" may refer to "deriving and/or establishing at least a first current ADS-related operational condition", "determining at least a first current - or essentially current - ADS-related operational condition", "determining at least a first ongoing and/or recently ongoing ADS-related operational condition", "determining at least a first current ADS-affecting operational condition" and/or "determining at least a first current ADS-related operating condition", and according to an example further to "determining at least a first current driving-related operational condition", "determining at least a first current ADS-related operational condition comprising states of vehicle surroundings and/or states e.g. internal states of said vehicle, said ADS and/or a software of said ADS".

Optionally, and as illustrated in an exemplifying manner in exemplifying Fig. 1, the buffer segment length adjusting system 1 may further - e.g. by means of an optional **buffer constraints determining unit 104** - be adapted and/or configured for determining at least a first current buffer-related constraint. Thereby, there may be established ongoing or essentially ongoing - and/or recently ongoing - conditions, restrictions and/or limitations associated with and/or pertinent the event recording buffer 3, such as e.g. currently - or essentially currently - available storage capacity thereof. The buffer-related constraints may be represented by any feasible one or more constraints applicable in view of the event recording buffer 3, such as relating to a platform thereof. The phrase "determining at least a first current buffer-related constraint" may refer to "deriving and/or establishing at least a first current buffer-related constraint", "determining at least a first current - or essentially current - buffer-related constraint", "determining at least a first ongoing and/or recently ongoing buffer-related constraint" and/or "determining at least a first current buffer platform-related constraint".

As illustrated in an exemplifying manner in exemplifying Fig. 1, the buffer segment length adjusting system 1 is further - e.g. by means of a **dynamic buffer setting unit 105** - adapted and/or configured for setting a respective start time point and end time point of-e.g. an event segment length of - the event recording buffer 3 based on the triggering event conditions and the at least first current ADS-related operational condition. Thereby, by assessment of the identified conditions of the triggering event and the determined current one or more ADS-related operational conditions, there may be defined and/or derived in view of the triggering event respective event recording buffer start and end time points deemed and/or defined relevant, suitable and/or sufficient pertinent such conditions. That is, for differing triggering event conditions in combination with differing ADS-related operational condition(s), differing data storage time periods may be relevant; for instance, for a certain type of triggering event during certain ADS-related operational conditions, certain start and/or end time points may be sufficient, while for another - or the same - type of triggering event during other ADS-related operational conditions, other start and/or end time points may be sufficient. That is, differing types of ADS-related operating conditions may for instance infer differing event onsets and/or event types. Accordingly, rather than - as known in the art - storing a fixed buffer length for all triggered events, with the introduced concept there is provided an approach dynamically and/or automatically adjusting the time period for which data should be stored by taking into consideration the triggering event conditions in combination with the current ADS-related operational condition(s). Thus, by adapting a buffer segment length of the event recording buffer 3 in accordance with said conditions, the buffer storage used for each respective event triggering data storage, may be sufficiently set, such as optimized. This in turn may decrease the memory needs to be allocated for data storage, which instead may be allocated to other applications e.g. running on a - e.g. central - compute node. Furthermore, in effect, this may lead to avoiding storing unnecessary data, which subsequently may increase the probability of capturing all - or essentially all - or an increased amount of relevant and interesting data, e.g. from production vehicles with their limitations in terms of on-board storage. Subsequently, this may increase and/or maximize the probability to store and potentially retain all or essentially all - or an increased number of - experienced events, in event recording buffers 3, e.g. of production vehicles. Consequently, with the introduced concept, the possibility of missing rare event or edge cases may be decreased and/or minimized, subsequently increasing confidence in monitoring capabilities.

Should at least a first current buffer-related constraint optionally have been determined, then setting a respective start time point and end time point may optionally further comprise - and/or the dynamic buffer setting unit 105 may optionally further be adapted and/or configured for - setting said start time point and/or said end time point additionally based on the at least first current buffer-related constraint. Thereby, by assessment of the identified conditions of the triggering event and the determined current one or more ADS-related operational conditions - and in addition thereto by assessment of the determined current one or more buffer-related constraints - there may be defined and/or derived in view of the triggering event respective event recording buffer start and end time points deemed and/or defined relevant, suitable and/or sufficient pertinent such conditions and such constraint(s). That is, for differing triggering event conditions in combination with differing ADS-related operational condition(s) and buffer-related constraints, differing data storage time periods may be relevant; for instance, for a certain type of triggering event during certain ADS-related operational conditions and buffer-related constraints, certain start and/or end time points may be sufficient, while for another - or the same - type of triggering event during other - or the same - ADS-related operational conditions during other buffer-related constraints, other start and/or end time points may be sufficient, such as e.g. a shorter time period being preferred should the event recording buffer 3 currently have e.g. limited storage capacity. Accordingly, the period of time for which data from the ADS 21 is relevant to store may be dynamically and/or automatically adjusted by taking into consideration the triggering event conditions in combination with the current ADS-related operational condition(s) and in addition thereto the current buffer-related constraint(s). Thus, by adapting a buffer segment length of the event recording buffer 3 in accordance with said conditions and constraint(s), the buffer storage used for each respective event triggering data storage, may be even further sufficiently set, such as optimized. The phrase "setting a respective start time point and end time point of said event recording buffer" may throughout the disclosure refer to "setting a respective start time point and end time point of an event segment length of said event recording buffer" "defining, regulating and/or determining a respective start time point and end time point of said event recording buffer, "setting a time period for which data should be stored in said event recording buffer", "setting a respective start time point and end time point of said event recording buffer applicable and/or valid for said triggering event" and/or "setting a respective start time point and end time point of said event recording buffer relevant for capturing said triggering event and/or relevant for capturing one or more events associated with said triggering event e.g. underlying and/or leading up thereto". The phrase "based on the triggering event conditions and said at least first current ADS-related operational condition", on the other hand, may refer to "based on assessment of the triggering event conditions and said at least first current ADS-related operational condition" and/or "using as input the triggering event conditions and said at least first current ADS-related operational condition". Moreover, "additionally based on said at least first current buffer-related constraint" may refer to "additionally based on assessment of said at least first current buffer-related constraint" and/or "additionally using as input said at least first current buffer-related constraint".

The start time point and end time point may respectively be represented by any feasible points in time - occurring before and/or after occurrence of the triggering event - as determined using the triggering event conditions and the current ADS-related operational condition(s) - and potentially additionally the current buffer-related constraint(s) - as input, and the time period between the start and end time points may be of any feasible duration, such as ranging from less than a second up to tens of seconds or even longer. Setting the respective start and end time points point of the event recording buffer 3 may be accomplished in any feasible manner using the the identified triggering event conditions and the determined at least first current ADS-related operational condition - and potentially additionally the determined at least first current buffer-related constraints - as input. Optionally, however, setting a respective start time point and end time point of the event recording buffer 3 may comprise - and/or the dynamic buffer setting unit 105 may optionally be adapted and/or configured for - deriving said start time point and/or said end time point from predefined start and end time candidates pre-associated with differing triggering event conditions and ADS-related operational conditions. Thereby, the start and/or end time points may - e.g. in a lookup-based manner - be retrieved from finding a match - at least to a predeterminable extent - between the identified triggering event conditions and the determined ADS-related operational condition(s), among predefined sets - e.g. available in an exemplifying **database db** - of differing triggering event conditions and ADS-related operational conditions pre-associated with respective start and/or end time points - and/or time periods - deemed relevant for respective conditions. Accordingly, in this manner, there may be derived predefined buffer segment lengths associated with triggering event conditions and ADS-related operational condition(s) equal and/or similar to the identified triggering event conditions and the determined at least first current ADS-related operational condition. Potentially, setting a respective start time point and end time point of the event recording buffer 3 may comprise - and/or the dynamic buffer setting unit 105 may optionally be adapted and/or configured for - deriving said start time point and/or said end time point from predefined start and end time candidates pre-associated with differing triggering event conditions, ADS-related operational conditions and buffer-related constraints. In this manner, there may be derived predefined buffer segment lengths associated with triggering event conditions, ADS-related operational condition(s) and buffer-related constraints equal and/or similar to the identified triggering event conditions, the determined at least fist ADS-related operational condition and the optionally determined at least first current buffer-related constraint. The phrase "deriving said start time point and/or said end time point from predefined start and end time candidates" may refer to "determining, retrieving, estimating and/or interpolating said start time point and/or said end time point from predefined start and end time candidates", "deriving said start time point and/or said end time point from available, predetermined and/or lookup-provided start and end time candidates" and/or "deriving said start time point and/or said end time point from finding to a predeterminable extent matching start and/or end time candidates among predefined start and end time candidates", whereas "candidates" may refer to "options and/or alternatives". The phrase "pre-associated with differing triggering event conditions and ADS-related operational conditions", on the other hand, may refer to "defined for and/or linked to differing triggering event conditions and ADS-related operational conditions", and according to an example further to "pre-associated with differing triggering event conditions, ADS-related operational conditions and buffer-related constraints".

Additionally or alternatively - for instance should the identified triggering event conditions indicate exceedance and/or falling short of a predeterminable KPI threshold and/or should the identified triggering event conditions indicate a perception-related error exceeding a predeterminable discrepancy threshold - setting a respective start time point and end time point of the event recording buffer 3 may optionally comprise - and/or the dynamic buffer setting unit 105 may optionally be adapted and/or configured for - assessing at least a portion of the obtained sensor data for identifying one or more events underlying the triggering event, a time range of said one or more events forming basis for the start and/or end time points. Thereby, by assessing - e.g. back-tracing and/or assessing in reverse - obtained sensor data and/or buffered data e.g. including the determined current at least first current ADS-related operational condition and potentially further the optionally determined at least first current buffer-related constraint, one or more events - for instance an identified scenario - related to, leading up to and/or underlying the triggering event, may be found, and the pertinent time range of the found one or more events - e.g. scenario - used as input for setting the start and/or end time points of the event recording buffer 3. For instance, as previously discussed, differing types of ADS-related operating conditions may infer differing event onsets and/or event types. Thus, by adapting the start and/or end time points of the event recording buffer 3 taking into consideration the time range of the identified one or more events, for instance an identified start point and/or onset of the identified one or more events - e.g. of an identified scenario - forming basis for the start time point and/or an identified end point of the identified one or more events - e.g. the triggering event and/or end point of said scenario - forming basis for the end time point, the buffer segment length to utilize for the triggering event may be sufficiently set, such as optimized.

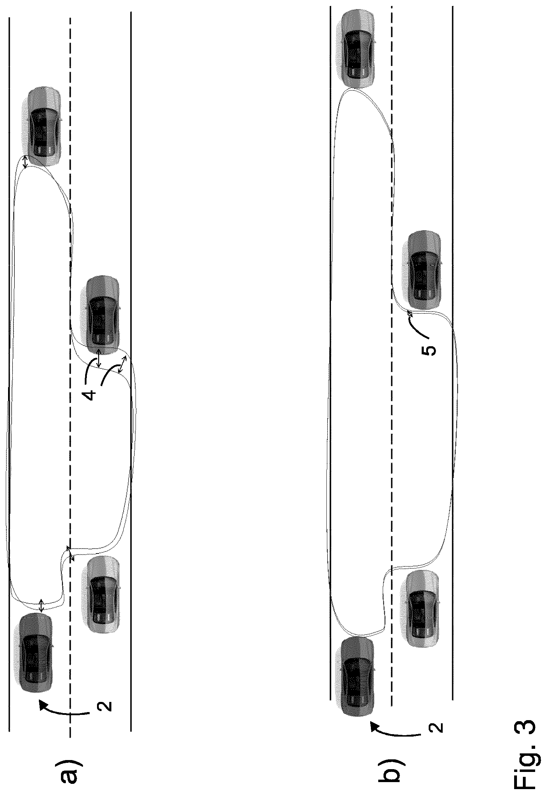

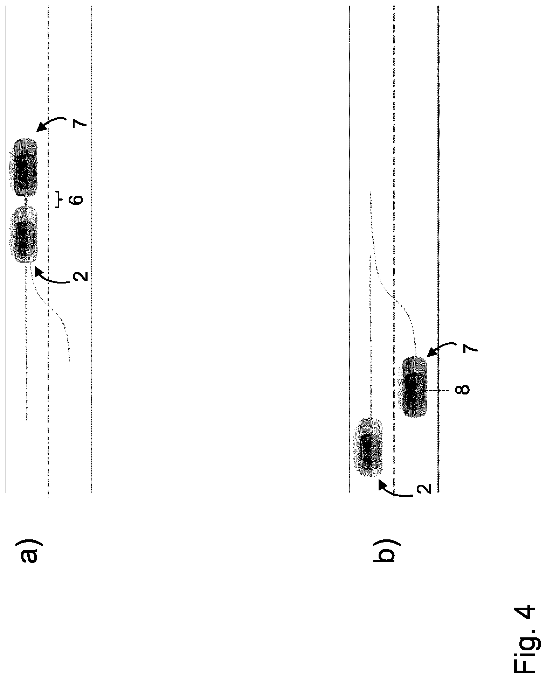

To illustrate this, **Fig. 3** depicts an exemplifying scenario involving a perception-related error, whereas **Fig. 4** depicts an exemplifying scenario involving a low/high KPI value where scenario identification is used for a subsequent buffer segment length determination. In Fig. 3a, there is depicted outputs from two different paths pertaining to perception - here an object free area estimated by an at least a first onboard vision sensor and an object free area estimated by an onboard LIDAR - which are compared and found to mismatch and/or be **misaligned 4,** thus triggering a data collection. To determine the appropriate start time point for this segment in terms of data to store in the event recording buffer 3, available buffered data can be analysed backwards in time from the triggering position to find the **onset 5** of this discrepancy, which - as shown in an exemplifying manner in Fig. 3b - is likely different than the larger discrepancy 4. An end time point may in this case for instance be set to the time point of the triggering event. In a similar manner, in Fig. 4a, there is depicted how data collection is triggered by an **exceedance 6** of a KPI value, e.g, relating to a PET (Post Encroachment Time), TTC (Time To Collision), etc.; here represented by an **other vehicle 7** cutting in close in front of the ego vehicle 2. In Fig. 4b, there is depicted how a scenario related to this KPI value is identified in the buffered data. Once the **start point 8** and potentially the end point of the scenario have been determined, these can be used to define the start and end time points for the event recording buffer 3. It may be noted that the end point might not necessarily have happened at the point of the KPI exceedance, but could potentially be determined later as the situation develops. The phrase "assessing at least a portion of the obtained sensor data" may refer to "assessing at least a portion of the obtained sensor data and the determined at least first current ADS-related condition" and/or "assessing at least a portion of the obtained sensor data and potentially further buffered data", and according to an example further to "assessing backwards and/or in reverse and/or back-tracing at least a portion of the obtained sensor data" and/or "assessing at least a portion of the obtained sensor data, the determined at least first current ADS-related condition and the at least first current buffer-related constraint". Moreover, according to an example, "assessing at least a portion of the obtained sensor data" may further refer to "assessing, when the identified triggering event conditions indicate exceedance - and/or falling short of - a predeterminable KPI threshold and/or when the identified triggering event conditions indicate a perception-related error exceeding a predeterminable discrepancy threshold, at least a portion of the obtained sensor data". The phrase "for identifying one or more events underlying said triggering event", on the other hand, may refer to "for finding one or more events underlying said triggering event" and/or "for identifying one or more events underlying, related to and/or leading up to said triggering event", and according to an example further to "for identifying at least a first scenario underlying said triggering event". Moreover, "a time range of said one or more events forming basis for said start and/or end time points" may refer to "a time range of said one or more events - e.g. the identified scenario(s) - defining said start and/or end time points", and according to an example further to "the determined at least first current ADS-related condition in combination with a time range of said one or more events forming basis for said start and/or end time points" and/or "the determined at least first current ADS-related condition and the optionally determined at least first current buffer-related constraint in combination with a time range of said one or more events, forming basis for said start and/or end time points". Furthermore, according to an example, "a time range of said one or more events forming basis for said start and/or end time points" may refer to "an identified start point and/or onset of the identified one or more events - e.g. of an identified scenario - forming basis for the start time point and/or an identified end point of the identified one or more events - e.g. the triggering event and/or end point of said scenario - forming basis for the end time point".

Furthermore, additionally or alternatively, setting a respective start time point and end time point of the event recording buffer 3 may optionally comprise - and/or the dynamic buffer setting unit 105 may optionally be adapted and/or configured for - feeding the triggering event conditions and the at least first current ADS-related operational condition as input to a **machine learning model 9** trained to, based on the input, output respective start and/or end time points defined as sufficient. Thereby, by feeding the identified triggering event conditions along with the determined ADS-related operating condition(s) - and potentially along with the optionally determined at least first current buffer-related constraint - to such a machine learning model 9 e.g. represented by a neural network, there may be set event recording buffer start and/or end time points preferred and/or sufficient for such conditions and/or constraints, applicable for the triggering event. Thus, by adapting the start and/or end time points of the event recording buffer 3 based on output from the machine learning model 9, the buffer segment length to utilize for the triggering event may be sufficiently set, such as optimized.

The machine learning model 9 may be represented by any feasible machine learning model and/or neural network trained to - using the identified triggering event conditions and the determined ADS-related operating condition(s) and potentially further the optionally determined at least first current buffer-related constraint as input(s) - output respective start and end time points defined as - and/or deemed - sufficient, preferred, appropriate and/or optimal. According to an exemplifying implementation, the input(s) may potentially be used in relation to a clustering algorithm to extract the triggering event conditions - e.g. the event type - with higher reliability than the pure data. This step may then be followed by a neural network 9 used to output buffer start and end time points - potentially along with associated confidence levels associated therewith - using the potentially augmented input(s) together with the original ones. Training such a machine learning-based system 9 could be done by previously collected data being analysed to find a required buffer segment length sufficient to find the relevant information in the event, potentially further as well as initialise system components. This pair of input - i.e. the original training data - and output - i.e. the analysed preferred e.g. optimal buffer segment lengths - can thus be used as training data. That is, data from different triggering event conditions - e.g. event types - may be used, appropriate features - corresponding to the data available at run-time - may be extracted and fed into the machine learning model 9 potentially together with respective buffer-related constraints. It may be noted that both triggering event conditions - e.g. event type - and ADS-related operational conditions may be contained in the original training data pertaining to each event. Further, since the data is already available for analysis it is possible to deduce the actual needed and/or preferred buffer segment length - which might well be much shorter than the segment recorded and stored - towards which the output of the machine learning model 9 can be trained. The phrase "feeding the triggering event conditions and said at least first current ADS-related operational condition as input" may refer to "inputting the triggering event conditions and said at least first current ADS-related operational condition", and according to an example further to "feeding the triggering event conditions, said at least first current ADS-related operational condition and said at least first current buffer-related constraint, as input". Moreover, "machine learning model" may according to an example refer to "neural network", whereas "start and/or end time points defined as sufficient" may refer to "start and/or end time points defined as - and/or deemed - sufficient, preferred, appropriate and/or optimal".

Optionally, setting a respective start time point and end time point of the event recording buffer 3 may optionally comprise - and/or the dynamic buffer setting unit 105 may optionally be adapted and/or configured for - setting the start time point based on the triggering event conditions and the at least first current ADS-related operational condition provided an estimated confidence level pertinent the start time point exceeds a start time point confidence threshold, and/or setting the end time point based on the triggering event conditions and said at least first current ADS-related operational condition provided an estimated confidence level pertinent the end time point exceeds an end time point confidence threshold. Thereby, potentially determined confidence levels estimated for respective start and end time points, may be compared to respective predeterminable start and end time point confidence thresholds, whereupon the start time point and/or end time point is/are set based on the triggering event conditions and the at least first current ADS-related operational condition - and potentially further based on the optionally determined at least first current buffer-related constraint - only when the associated confidence level exceeds the corresponding confidence threshold. Should the confidence level estimated for the start time point fail to reach and/or exceed the start time point confidence threshold, then for instance a predeterminable generic start time point and/or time period may be utilized, and in a similar manner, should the confidence level estimated for the end time point fail to reach and/or exceed the end time point confidence threshold, then for instance a predeterminable generic end time point and/or time period may be utilized. Accordingly, in this manner, start and/or end time points with insufficient confidence levels may be refrained from being used.

The start time point confidence threshold and the end time point confidence threshold may respectively be defined at any feasible level, which respective level may - or may not - be the same. Moreover, respective start and end time point confidence level associated with respective start and end time points, may be determined and/or estimated in any feasible - e.g. known - manner. The phrase "provided an estimated confidence level pertinent said start time point exceeds a start time point confidence threshold" may refer to "only if an estimated confidence level pertinent said start time point exceeds a start time point confidence threshold", "provided a confidence level estimated for said start time point exceeds a start time point confidence threshold" and/or "provided an estimated confidence level pertinent said start time point exceeds a predeterminable confidence threshold". In a similar manner, the phrase "provided an estimated confidence level pertinent said end time point exceeds an end time point confidence threshold" may refer to "only if an estimated confidence level pertinent said end time point exceeds an end time point confidence threshold", "provided a confidence level estimated for said end time point exceeds an end time point confidence threshold" and/or "provided an estimated confidence level pertinent said end time point exceeds a predeterminable confidence threshold". According to an example, "provided an estimated confidence level pertinent said start time point exceeds a start time point confidence threshold" may refer to "provided an estimated confidence level pertinent said start time point exceeds a start time point confidence threshold, otherwise setting said start time point to a predeterminable and/or predefined - e.g. generic - time point", whereas in a similar manner, "provided an estimated confidence level pertinent said end time point exceeds an end time point confidence threshold" may refer to "provided an estimated confidence level pertinent said end time point exceeds an end time point confidence threshold, otherwise setting said end time point to a predeterminable and/or predefined - e.g. generic - time point". Moreover, according to an example, the phrase "setting the start time point based on the triggering event conditions and said at least first current ADS-related operational condition" may refer to "setting the start time point based on the triggering event conditions, said at least first current ADS-related operational condition, and said at least first current buffer-related constraint", whereas in a similar manner "setting the end time point based on the triggering event conditions and said at least first current ADS-related operational condition" according to an example may refer to "setting the end time point based on the triggering event conditions, said at least first current ADS-related operational condition and said at least first current buffer-related constraint".

As further shown in Fig. 1, the buffer segment length adjusting system 1 comprises a sensor data obtaining unit 101, a triggering event identifying unit 102, an operational conditions determining unit 103, an optional buffer constraints determining unit 104 and a dynamic buffer setting unit 105, all of which already have been described in greater detail above. Furthermore, the embodiments herein for dynamically adjusting an event segment length of data stored in an event recording buffer 3 of an ADS 21 of a vehicle 2, may be implemented through one or more processors, such as a **processor 106,** for instance represented by at least a first Central Processing Unit, CPU, at least a first Graphics Processing Unit, GPU, at least a first Tensor Processing Unit, TPU, and/or at least a first Field-Programmable Gate Array, FPGA, together with computer program code for performing the functions and actions of the embodiments herein. Said program code may also be provided as a computer program product, for instance in the form of a data carrier carrying computer program code for performing the embodiments herein when being loaded into the buffer segment length adjusting system 1. One such carrier may be in the form of a CD/DVD ROM disc and/or a hard drive, it is however feasible with other data carriers. The computer program code may furthermore be provided as pure program code on a server and downloaded to the buffer segment length adjusting system 1. The buffer segment length adjusting system 1 may further comprise a **memory 107** comprising one or more memory units. The memory 107 optionally includes high-speed random access memory, such as DRAM, SRAM, DDR RAM, or other random access solid-state memory devices, and further optionally includes non-volatile memory, such as one or more magnetic disk storage devices, optical disk storage devices, flash memory devices, or other non-volatile solid-state storage devices. Moreover, the memory 107 may be arranged to be used to store e.g. information, and further to store data, configurations, scheduling, and applications, to perform the methods herein when being executed in the buffer segment length adjusting system 1. For instance, the computer program code may be implemented in the firmware, stored in FLASH memory 107, of an embedded processor 106, and/or downloaded wirelessly e.g. from an off-board server. Furthermore, units 101-105, the optional processor 106 and/or the optional memory 107, may at least partly be comprised in one or more **nodes 108** e.g. ECUs of the vehicle 2, e.g. in and/or in association with the ADS 21. Those skilled in the art will also appreciate that said units 101-105 described above as well as any other unit, interface, system, controller, module, device, element, feature, or the like described herein may refer to, comprise, include, and/or be implemented in or by a combination of analog and digital circuits, and/or one or more processors configured with software and/or firmware, e.g. stored in a memory such as the memory 107, that when executed by the one or more processors such as the processor 106 perform as described herein. One or more of these processors, as well as the other digital hardware, may be included in a single Application-Specific Integrated Circuitry, ASIC, or several processors and various digital hardware may be distributed among several separate components, whether individually packaged or assembled into a System-on-a-Chip, SoC.

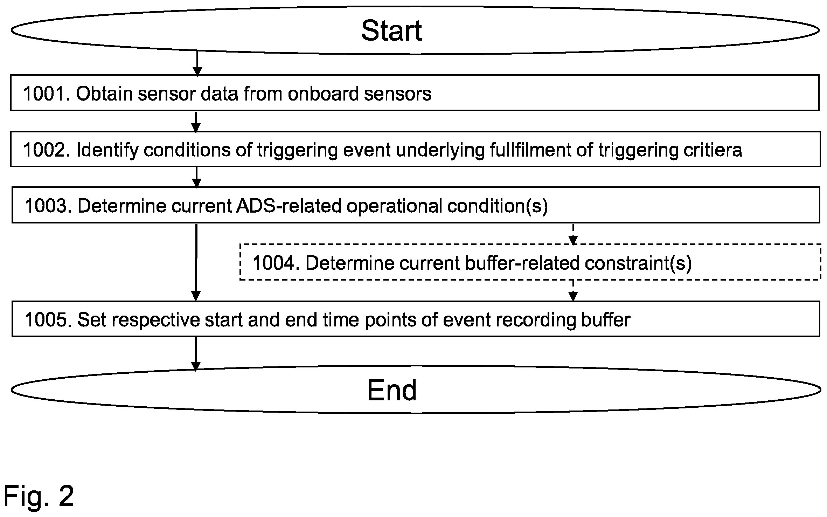

**Fig. 2** is a flowchart depicting an exemplifying method performed by buffer segment length adjusting system 1 according to embodiments of the disclosure. Said method is for dynamically adjusting an event segment length of data stored in an event recording buffer 3 of an ADS 21 of a vehicle 2. The exemplifying method, which may be continuously repeated, comprises one or more of the following actions discussed with support from Fig. 1. Moreover, the actions may be taken in any suitable order and/or one or more actions may be performed simultaneously and/or in alternate order where applicable. For instance, Action 1003 and optional Action 1004 may be performed in alternate order and/or simultaneously.

### Action 1001

In Action 1001, the buffer segment length adjusting system 1 obtains - e.g. with support from the sensor data obtaining unit 101 - sensor data of one or more sensors 22 onboard the vehicle 2.

### Action 1002

In Action 1002, the buffer segment length adjusting system 1 identifies - e.g. with support from the triggering event identifying unit 102 - upon the sensor data rendering fulfilment - and/or a state of a software of the ADS 21 rendering fulfilment - of event recording triggering criteria, conditions of a triggering event underlying said fulfilment.

### Action 1003

In Action 1003, the buffer segment length adjusting system 1 identifies - e.g. with support from the operational conditions determining unit 103 - at least a first current ADS-related operational condition.

### Action 1004

In optional Action 1004, the buffer segment length adjusting system 1 may determine - e.g. with support from the optional buffer constraints determining unit 104 - at least a first current buffer-related constraint.

### Action 1005

In Action 1005, the buffer segment length adjusting system 1 sets - e.g. with support from the dynamic buffer setting unit 105 - a respective start time point and end time point of-e.g. an event segment length of - the event recording buffer 3 based on the triggering event conditions and the at least first. current ADS-related operational condition.

Optionally, should Action 1005 follow upon optional Action 1004 of determining at least a first current buffer-related constraint, then Action 1005 of setting a respective start time point and end time point of the event recording buffer 3 may comprise - and/or the dynamic buffer setting unit 105 may be adapted and/or configured for - setting the start time point and/or the end time point additionally based on the at least first current buffer-related constraint

Further optionally, Action 1005 of setting a respective start time point and end time point of the event recording buffer 3 may comprise - and/or the dynamic buffer setting unit 105 may be adapted and/or configured for - setting the start time point based on the triggering event conditions and the at least first current ADS-related operational condition provided an estimated confidence level pertinent the start time point exceeds a start time point confidence threshold, and/or setting the end time point based on the triggering event conditions and the at least first current ADS-related operational condition provided an estimated confidence level pertinent the end time point exceeds an end time point confidence threshold.

Moreover, optionally, Action 1005 of setting a respective start time point and end time point of the event recording buffer 3 may comprise - and/or the dynamic buffer setting unit 105 may be adapted and/or configured for - deriving the start time point and/or the end time point from predefined start and end time candidates pre-associated with differing triggering event conditions and ADS-related operational conditions.

Additionally or alternatively, optionally, Action 1005 of setting a respective start time point and end time point of the event recording buffer 3 may comprise - and/or the dynamic buffer setting unit 105 may be adapted and/or configured for - assessing at least a portion of the obtained sensor data for identifying one or more events underlying the triggering event, a time range of the one or more events forming basis for the start and/or end time points.

Furthermore, additionally or alternatively, Action 1005 of setting a respective start time point and end time point of the event recording buffer 3 may comprise - and/or the dynamic buffer setting unit 105 may be adapted and/or configured for - feeding the triggering event conditions and the at least first current ADS-related operational condition as input to a machine learning model 9 trained to, based on the input, output respective start and/or end time points defined as sufficient.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "an" or "a" does not exclude a plurality.

## Claims

1. A method performed by a buffer segment length adjusting system (1) for dynamically adjusting an event segment length of data stored in an event recording buffer (3) of an Automated Driving System, ADS (21), of a vehicle (2), said method comprising:
***obtaining*** (1001) sensor data of one or more sensors (22) onboard said vehicle (2);
***identifying*** (1002), upon said sensor data rendering fulfilment - and/or a state of a software of the ADS (21) rendering fulfilment - of event recording triggering criteria, conditions of a triggering event underlying said fulfilment;
***determining*** (1003) at least a first current ADS-related operational condition; and
***setting*** (1005) a respective start time point and end time point of said event recording buffer (3) based on the triggering event conditions and said at least first current ADS-related operational condition.

2. The method according to claim 1, wherein said ***setting*** (1005) a respective start time point and end time point of said event recording buffer (3) comprises setting the start time point based on the triggering event conditions and said at least first current ADS-related operational condition provided an estimated confidence level pertinent said start time point exceeds a start time point confidence threshold, and/or setting the end time point based on the triggering event conditions and said at least first current ADS-related operational condition provided an estimated confidence level pertinent said end time point exceeds an end time point confidence threshold.

3. The method according to claim 1 or 2, wherein said ***setting*** (1005) a respective start time point and end time point of said event recording buffer (3) comprises deriving said start time point and/or said end time point from predefined start and end time candidates pre-associated with differing triggering event conditions and ADS-related operational conditions.

4. The method according to any one of claims 1-3, wherein said ***setting*** (1005) a respective start time point and end time point of said event recording buffer (3) comprises assessing at least a portion of the obtained sensor data for identifying one or more events underlying said triggering event, a time range of said one or more events forming basis for said start and/or end time points.

5. The method according to any one of claims 1-4, wherein said ***setting*** (1005) a respective start time point and end time point of said event recording buffer (3) comprises feeding the triggering event conditions and said at least first current ADS-related operational condition as input to a machine learning model (9) trained to, based on the input, output respective start and/or end time points defined as sufficient.

6. The method according to any one of claims 1-5, further comprising:
***determining*** (1004) at least a first current buffer-related constraint,
wherein said ***setting*** (1005) a respective start time point and end time point of said event recording buffer (3) comprises setting said start time point and/or said end time point additionally based on said at least first current buffer-related constraint.

7. A **buffer segment length adjusting system** (1) for dynamically adjusting an event segment length of data stored in an event recording buffer (3) of an Automated Driving System, ADS (21), of a vehicle (2), said buffer segment length adjusting system (1) comprising:
a **sensor data obtaining unit** (101) for ***obtaining*** (1001) sensor data of one or more sensors (22) onboard said vehicle (2);
a **triggering event identifying unit** (102) for ***identifying*** (1002), upon said sensor data rendering fulfilment - and/or a state of a software of the ADS rendering fulfilment - of event recording triggering criteria, conditions of a triggering event underlying said fulfilment;
an **operational conditions determining unit** (103) for ***determining*** (1003) at least a first current ADS-related operational condition; and
a **dynamic buffer setting unit** (15) for ***setting*** (1005) a respective start time point and end time point of said event recording buffer (3) based on the triggering event conditions and said at least first current ADS-related operational condition.

8. The buffer segment length adjusting system (1) according to claim 7, wherein said dynamic buffer setting unit (105) is adapted for setting the start time point based on the triggering event conditions and said at least first current ADS-related operational condition provided an estimated confidence level pertinent said start time point exceeds a start time point confidence threshold, and/or setting the end time point based on the triggering event conditions and said at least first current ADS-related operational condition provided an estimated confidence level pertinent said end time point exceeds an end time point confidence threshold.

9. The buffer segment length adjusting system (1) according to claim 7 or 8, wherein said dynamic buffer setting unit (105) is adapted for deriving said start time point and/or said end time point from predefined start and end time candidates pre-associated with differing triggering event conditions and ADS-related operational conditions.

10. The buffer segment length adjusting system (1) according to any one of claims 7-9, wherein said dynamic buffer setting unit (105) is adapted for assessing at least a portion of the obtained sensor data for identifying one or more events underlying said triggering event, a time range of said one or more events forming basis for said start and/or end time points.

11. The buffer segment length adjusting system (1) according to any one of claims 7-10, wherein said dynamic buffer setting unit (105) is adapted for feeding the triggering event conditions and said at least first current ADS-related operational condition as input to a machine learning model trained (9) to, based on the input, output respective start and/or end time points defined as sufficient.

12. The buffer segment length adjusting system (1) according to any one of claims 7-11, further comprising:
a **buffer constraints determining unit** (104) for ***determining*** (1004) at least a first current buffer-related constraint,
wherein said dynamic buffer setting unit (105) is adapted for setting said start time point and/or said end time point additionally based on said at least first current buffer-related constraint.

13. A **vehicle** (2) comprising a buffer segment length adjusting system (1) according to any one of claims 7-12.

14. A computer program product comprising a computer program containing computer program code means arranged to cause a computer or a processor to execute the steps of a method according to any of claims 1-6, stored on a computer-readable medium or a carrier wave.

15. A non-volatile computer readable storage medium having stored thereon the computer program product of claim 14.
